# EUROPEAN PATENT SPECIFICATION

(11) **EP 1 290 877 B1**
(45) Date of publication and mention of the grant of the patent: **09.12.2009**
(21) Application number: 01936111.2
(22) Date of filing: 20.03.2001
(51) Int. Cl.: H04N 5/913

(54) **DATA SCRAMBLING AND DESCRAMBLING SYSTEM**
DATENVERSCHLÜSSELUNGS UND -ENTSCHLÜSSELUNGSSYSTEM
SYSTEME DE BROUILLAGE D'UN CONTENU ET SYSTEME DE DESEMBROUILLAGE DE CE CONTENU BROUILLE

(30) Priority: 07.04.2000 EP 00201276; 15.11.2000 EP 00204019
(43) Date of publication of application: 12.03.2003
(73) Proprietor: Irdeto Access B.V., 2132 HD Hoofddorp (NL)
(72) Inventor: WAJS, Andrew, Augustine, NL-2023 AA Haarlem (NL)
(74) Representative: de Vries, Johannes Hendrik Fokke
(86) International application number: PCT/EP2001/003184
(87) International publication number: WO 2001/078386

(56) References cited:
- EP-A- 0 773 681

## Description

The invention generally relates to the processing of scrambled content and more particularly to a system for scrambling content according to the preamble of claims 1 and 6, and to a system for descrambling scrambled content according to the preamble of claim 12.

Systems for providing scrambled content are used for example for providing video on demand services to receivers. Generally, obtaining video on demand requires a payment by the receiver so that unauthorised use of the video on demand content has to be prevented. To this end, the content will be scrambled before delivery to the receiver(s) requesting a video on demand service. In case of high speed digital data streams, providing a scrambled transport stream of data packets involves the use of sophisticated scrambling devices increasing the cost of the system.

Recently receiving equipment has been provided with storage devices with large capacity allowing hours of content, such as video, audio and still images to be stored. With the storage of such content in a storage device, it is desirable that the content remains scrambled after it has been received from a broadcast network, or downloaded from the Internet, for example. This is crucial for services using conditional access to allow use of the content by subscribers only, for example for services such as video on demand. However at the same time it is also desirable to allow processing of the video and audio content. Such processing may include jumping into the stream of content at certain points, changing the compression rate, displaying frames during fast forwarding or rewinding and adding watermarks or fingerprints to the content. In prior art systems these two requirements are contradictory, i.e. it is not possible to process the content when it is scrambled. Further, the descrambler used in prior art receiving equipment requires a high processing capacity for descrambling the scrambled content. A descrambler can be made as a special purpose circuit or a signal processor with high processing capacity to meet this requirement.

It is an object of the invention to provide a system of this type which is adapted to scramble high speed digital data streams at low cost.

Further, it is an object of the invention to provide a system for scrambling content of the above-mentioned type allowing processing of the content despite the content being scrambled.

A further object of the invention is to provide a system for scrambling content of the above-mentioned type allowing an improvement of descrambling performance at reduced processing capacity.

It is a further object of the invention to provide a system for descrambling scrambled content having means adapted to process the scrambled content.

According to a first aspect the invention provides a system for providing scrambled content, wherein the content is a data packet stream, each data packet containing at least one address, the system comprising a first processing unit having at least one input adapted to receive the content data packet stream to be scrambled, and a plurality of outputs, wherein the processing unit is programmed to divide the data packets of the content data packet stream over at least two or more of the outputs, wherein at least one output is connected to a corresponding scrambler to scramble the data packets received from this output.

In this manner a system for providing scrambled content is obtained, wherein by scrambling only a part of the input data packet stream, a scrambler can be used with a relatively low scrambling processing capacity. Moreover, a scrambler of low cost can be used and, if required, two or more outputs can have a scrambler connected to the same. Further, the processing unit is relatively simple as the processing unit only has to divide the data packets of the content data packet stream on the outputs. Moreover, the partially scrambled content allows a signal processor of the descrambling system to descramble the content to obtain the clear content at a reduced processing capacity. In this manner the cost of the descrambling system can be reduced. Sophisticated algorithms can be used in the descrambling system allowing predetermined processing of the partially scrambled content.

According to an alternative embodiment of the invention a system for scrambling content is provided, comprising a scrambler for scrambling the content, characterized in that the scrambler is programmed with a first algorithm for selecting sections from the content to be scrambled, wherein the first algorithm controls the scrambler to pass the selected sections unscrambled, wherein the selecting algorithm is such that the scrambled content with the selected sections can be processed according to a second algorithm.

In a second aspect of the invention a system for descrambling scrambled content is provided, comprising means for storing scrambled content, and a signal processor for descrambling received or stored scrambled content, characterized in that the signal processor is programmed with the second algorithm to scan the received and/or stored scrambled content for unscrambled sections and to process at least the unscrambled sections.

The invention will be further explained by reference to the drawing in which embodiments of the systems of the invention are shown in a very schematically manner.

Fig. 1 shows a first embodiment of a scrambling system of the invention.

Fig. 2 shows a diagram with an embodiment of a scrambling system and an embodiment of a descrambling system of the invention.

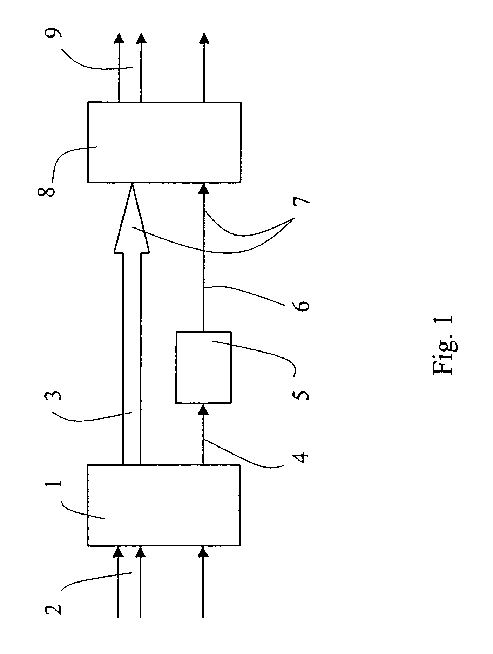

Referring to fig. 1 there is shown a system adapted to provide content to one or more receivers, for example a video on demand. The system comprises a router 1 having a plurality of inputs 2 and a plurality of outputs 3,4. The outputs 3 are represented by a single arrow. The content received on an input 2 is a data packet stream, wherein each data packet contains address information of at least one receiver. The address information may comprise individual receiver address information or multicast address information, i.e. addresses shared by many receivers. In particular the data packets can be IP data packets, wherein the system delivers the content to receivers through a world-wide computer network, such as the Internet.

The router 1, or more generally the processing unit, is programmed to divide the data packets of the input data stream received on one of the inputs 2 over two or more of the outputs 3,4, wherein the output 4 is connected to a scrambler 5 for scrambling the data packets provided on the output 4. The scrambled data packets are available on an output 6 of the scrambler 4. The data packets on the outputs 3 and 6 can be combined into one output data packet stream by means of a second router 8 having a plurality of inputs 7 and a plurality of outputs 9. It is also possible to use the router 1 for combining the data packets on the outputs 3 and 6 into one data packet stream. Further, it is also possible to forward the output data packet streams of the outputs 3 and 6 directly to the Internet, wherein these IP data packets are combined at the receiver side.

By using the system described, a relatively simple scrambler can be used to scramble only a part of the data packets of the content data packet stream received on an input 2. The processing unit 1 can also be a relatively low cost apparatus as a standard router can be used.

Generally, the router 1 will be programmed to divide the content input data packet stream proportionally on the outputs 3,4. In case scrambling the data packets of one output only would result in an insufficiently scrambling of the complete content data packet stream, it is of course possible to use a second scrambler connected to a further output of the router 1. This means that two or more outputs 4 will be connected to corresponding scramblers 5. In this case the load on the scramblers 5 can be balanced by distributing the data packets to be scrambled over the outputs 4 having a scrambler 5 connected to the same. In this manner a scrambler system is obtained comprising a number of relatively low cost scramblers, wherein the system is adapted to handle high speed traffic loads.

It is further possible to use the system to scramble a plurality of different content data packet streams received on different inputs 2.

Preferably, the router 1 is programmed such that the data packets for the output 4 are selected from the input data packet stream in accordance with a predetermined algorithm. For example this selection algorithm selects the data packets to be scrambled such that the unscrambled data packets can be used to process the complete data packet stream.

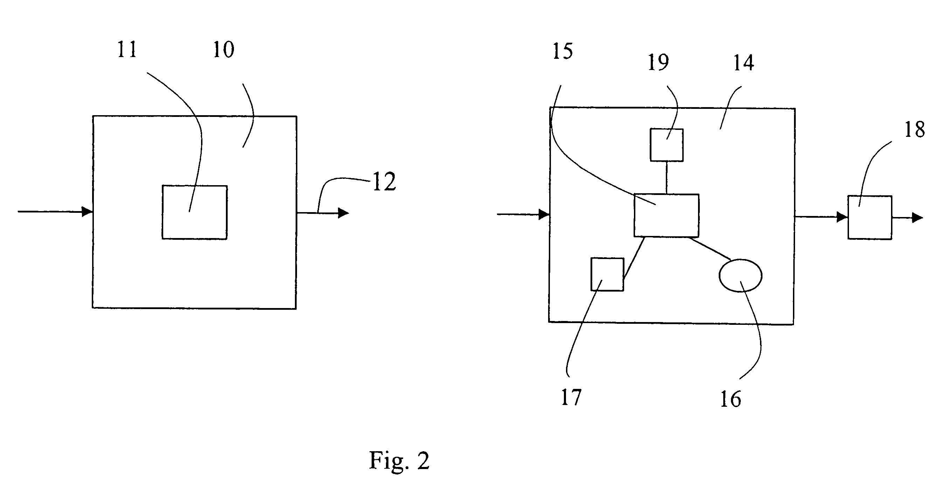

For a further description reference is made to fig. 2 showing a system 10 for scrambling content comprising a scrambler 11 for scrambling clear content. The system 10 may in practice be implemented as a system based on a suitably programmed computer. The scrambler 11 analyses the clear content stream and is programmed with a first algorithm for selecting sections of the clear content stream which should remain unscrambled. The clear content stream can either be analysed for selecting sections not to be scrambled in a separate step or during passing the content stream through the scrambler 11.

The first algorithm controls the scrambler 11 such that selected sections pass the scrambler 11 without being scrambled. In this manner, the output 12 of the system 10 provides a stream of scrambled content with selected sections which are unscrambled. The algorithm controlling the operation of the scrambler 11 is such that the output stream of the system 10 can not be used by unauthorized users, i.e. the unscrambled sections are insufficient to allow viewing, listening or the like at an acceptable level. However the unscrambled selected sections in the output data stream of the system 10 are sufficient to allow certain types of processing of the content. As examples for desirable processing of the content can be mentioned fast forward, rewind, compression reduction before storage on a storage device and watermarking of the content.

As an example of a suitable algorithm for the control of the scrambler 11, it is for example possible to select 10% of the complete content in a regular manner from the content stream to be scrambled by the scrambler 11. For example every ten seconds of content one second is not scrambled. Of course more sophisticated algorithms can be used as will be discussed hereinafter.

In case of video content, wherein the content is compressed according to MPEG algorithm, trick modes are required to enable the display of fast forwarded or rewound video images in case the viewer moves to a particular point in the video program. This is typically achieved by grabbing only I-frames or every n^{th} I-frame depending on the desired speed of rewind or fast forward and to display only these frames on screen each frame rapidly after the previous. The possibility to identify I-frames in the scrambled data stream can also be advantageous for allowing a more rapid display of the content when hopping to random locations in the content, for example to locate a certain scene in a movie.

Generally this requires knowledge of where I-frames are located within the transport stream. The software performing this operation, scans the transport stream and locates the I-frames and sends the I-frames to the decoder of the MPEG stream. However, if the content is completely scrambled as in prior art systems, the software can not scan for I-frames, but must first descramble the stream and then scan for I-frames. This would normally require a high processing capacity while still the time needed to decrypt and scan the stream will prohibit the desired fast forward or rewind effect. Using the system 10 described above will allow these known trick modes by using an algorithm controlling the scrambler 11 to leave I-frames in the clear, that is at least the transport packets containing I-frame header information.

The drawing further shows a system 14 for descrambling scrambled content provided by the system 10. The scrambled content can be received by broadcasting, multicasting on an internet, or can be downloaded from the Internet or the like. The system 14 comprises a signal processor 15 for descrambling a scrambled content stream. The signal processor 15 receives a scrambled content stream for example from a broadcast station, the Internet or a storage device 16, such as a hard disc, where the content was previously stored. Finally the system 14 comprises a control unit 17 by means of which a user can control the operation of the descrambling system 14, for example to start playback, fast forward, rewind or go to a desired location in the stream. The signal processor 15 is programmed with a second algorithm to scan the data stream for clear I-frames to allow these special functions of the system 14.

If a rewind or fast forward is requested through the control unit 17, the signal processor 15 scans the transport stream received for clear I-frame header packets and if a clear header is found by the signal processor 15 a number of subsequent transport packets is descrambled, after which the descrambled content can be decoded by a conventional MPEG decoder 18. In this manner a performance is obtained that is the same as for clear MPEG content. The information left in the clear is however insufficient to reconstruct the clear signal so that the conditional access is maintained. In the same manner the user can hop to a random location in the content stream, wherein the signal processor 15 first identifies a clear I-frame header and thereafter starts descrambling.

It is noted that the number I-frame headers which are left in the clear is optional. It is not necessary to leave every I-frame header in the clear; for example every fifth or tenth I-frame header may be left in the clear depending on the desired effect of fast forward or rewind. Further it is noted that it is not necessary to leave the full I-frame header in the clear. It is possible to leave only the first or transport packet in the clear. For, the processing unit only needs to be able to determine the location of the I-frame headers and it is not necessary to scan all details carried in the header. In this respect it is noted that it would even be possible to insert predetermined flags into the transport stream signalling the processing unit to forward a number of packets to the signal processor.

As another application, the system of the invention can be used to further compress the content for storage on the storage device 16. As digital video and audio are of very high quality in comparison to analogue VHS tape quality, a part of the high digital quality can be sacrificed for increased storage capacity. Such further compression can for example be achieved by changing the quantisation of coefficients in the macro blocks of an MPEG compressed sequence. As known, in MPEG compression image information is divided into macro blocks. To increase storage capacity, the quantisation level of macro blocks is reduced. Thereby bits and samples are thrown away reducing the bit rate and the quality simultaneously.

In order to allow such type of further compression, the algorithm controlling the operation of scrambler 11 leaves macro block information in the clear, whereas most of the other information in the signal is scrambled by the scrambler 11. Although most macro block information is left in the clear, it is still impossible to reconstruct a reasonable video image with only macro block information. It is noted that it is not necessary to leave all macro blocks in the clear. In this case the algorithm controlling the operation of signal processor 15 of the system 14 is such that the signal processor scans the stream for clear macro blocks and reduces the quantisation level before storing the data stream to disc 9.

Preferably an algorithm is used leaving macro blocks in the clear the compression of which has as less impact on the quality as possible. For example, macro blocks can be left in the clear depending on the type of scenes or its location in the screen.

As a further application, the systems described can be used to watermark the scrambled content received. The signal processor 15 scans the scrambled transport stream for clear data packets and adds a watermark provided by a watermarking device 19 to the clear data packet(s).

In the above examples the second algorithm allows specific desired processing of the scrambled content by the signal processor15. The first algorithm in the system 10 can however also be adapted to provide an output 12 with a maximum number of unscrambled sections still preventing unauthorized normal use of the scrambled content at an acceptable level. In this case the second algorithm of the signal processor 15 is just a descrambling algorithm. This results in a high performance of the descrambling operation in the signal processor 15 at a reduced processing capacity.

Although in the examples video content is mentioned, it will be clear that the invention can also be used on audio or still images.

From the above it will be understood that the invention provides a system wherein by intelligently scrambling content, the scrambled content can still be processed.

The invention is not restricted to the above described embodiments which can be varied in a number of ways within the scope of the attached claims.

## Claims

1. System for providing scrambled content, wherein the content is a data packet stream, each data packet containing at least one address, **characterized in that** the system comprises a first processing unit (1) having at least one input (2) adapted to receive the content data packet stream to be scrambled, and a plurality of outputs (3,4), wherein the processing unit is programmed to divide the data packets of the content data packet stream over at least two or more of the outputs, wherein at least one output (4) is connected to a corresponding scrambler (5) to scramble the data packets received from this output.

2. System according to claim 1, wherein the first processing unit (1) is programmed to select the data packets for said at least one output (4) from the content data packet stream in accordance with a predetermined algorithm.

3. System according to claim 1 or 2, wherein a second processing unit (8) is provided to combine the data packets of said two or more outputs (3,4) of the first processing unit (1) into one data packet stream including the scrambled data packets.

4. System according to claim 3, wherein the first and second processing units are made as a single processing unit (1).

5. System according to any one of the preceding claims, wherein a router is used as processing unit.

6. System (10) for scrambling content, comprising a scrambler (11) for scrambling the content, **characterized in that** the scrambler (11) is programmed with a first algorithm for selecting sections from the content to be scrambled, wherein the first algorithm controls the scrambler to pass the selected sections unscrambled to obtain an output of scrambled sections and unscrambled sections, wherein the unscrambled sections allow processing of the output according to a second algorithm.

7. System according to claim 6, wherein at least a plurality of sections include a section header, wherein the first algorithm controls the scrambler (11) to pass section headers unscrambled.

8. System according to claim 7, wherein the sections comprises a plurality of transport packets, wherein the first algorithm controls the scrambler (11) to pass only one or more transport packets of section headers unscrambled.

9. System according to claim 6, wherein the sections include macroblocks, wherein the first algorithm controls the scrambler to pass macroblocks unscrambled.

10. System according to claim 9, wherein the content is video content, wherein the first algorithm selects the macroblocks depending on the location in the screen or amount of redundant data.

11. System according to anyone of claims 6-10, wherein the first algorithm is adapted to provide a maximum number of unscrambled sections in the scrambled content, wherein the second algorithm comprises a descrambling algorithm.

12. System (14) for descrambling scrambled content, comprising a storage device (16) for storing scrambled content, and a signal processor (15) for descrambling received or stored scrambled content, **characterized in that** the signal processor (15) is programmed with the second algorithm to scan the received and/or stored scrambled content for unscrambled sections and to process at least the unscrambled sections.

13. System according to claim 12, wherein, in case of stored scrambled content, the second algorithm instructs the signal processor (15) to descramble one or more sections following the unscrambled sections.

14. System according to claim 12 or 13, wherein, in case of received scrambled content, the second algorithm instructs the signal processor (15) to reduce the compression of the inserted selected sections, preferably by reducing the quantisation level of the unscrambled sections.

15. System according to claim 12, wherein the second algorithm instructs the signal processor (15) to add a watermark to the unscrambled sections.

## Patentansprüche

1. System zum Bereitstellen von verschlüsseltem Inhalt, wobei der Inhalt ein Datenpaketstrom ist, wobei jedes Datenpaket mindestens eine Adresse aufweist, **dadurch gekennzeichnet, dass** das System eine erste Verarbeitungseinheit (1) mit mindestens einem zum Empfangen des zu verschlüsselnden Inhalts-Datenpaketstroms eingerichteten Eingang (2) und einer Mehrzahl von Ausgängen (3, 4) aufweist, wobei die Verarbeitungseinheit zum Aufteilen der Datenpakete des Inhalts-Datenpaketstroms auf mindestens zwei oder mehr der Ausgänge programmiert ist, wobei mindestens ein Ausgang (4) mit einem entsprechenden Verschlüsseler (5) zum Verschlüsseln der von diesem Ausgang empfangenen Datenpakete verbunden ist.

2. System gemäß Anspruch 1, wobei die erste Verarbeitungseinheit (1) zum Auswählen der Datenpakete für diesen mindestens einen Ausgang (4) aus dem Inhalts-Datenpaketstrom in Übereinstimmung mit einem vorher festgelegten Algorithmus programmiert ist.

3. System gemäß Anspruch 1 oder 2, wobei eine zweite Verarbeitungseinheit (8) zum Kombinieren der Datenpakete der zwei oder mehr Ausgänge (3, 4) der ersten Verarbeitungseinheit (1) in einen einzelnen Datenpaketstrom inklusive der verschlüsselten Datenpakete bereitgestellt ist.

4. System gemäß Anspruch 3, wobei die erste und die zweite Verarbeitungseinheit als eine einzige Verarbeitungseinheit (1) ausgeführt sind.

5. System gemäß einem beliebigen der vorangehenden Ansprüche, wobei als Verarbeitungseinheit ein Router verwendet ist.

6. System (10) zum Verschlüsseln von Inhalt, aufweisend einen Verschlüsseler (11) zum Verschlüsseln des Inhalts, **dadurch gekennzeichnet, dass** der Verschlüsseler (11) mit einem ersten Algorithmus zum Auswählen von Abschnitten aus dem zu verschlüsselnden Inhalt programmiert ist, wobei der erste Algorithmus den Verschlüsseler zum unverschlüsselten Durchlassen der ausgewählten Abschnitte steuert, um eine Ausgabe von verschlüsselten Abschnitten und unverschlüsselten Abschnitten zu erhalten, wobei die unverschlüsselten Abschnitte ein Verarbeiten der Ausgabe entsprechend einem zweiten Algorithmus erlauben.

7. System gemäß Anspruch 6, wobei mindestens eine Mehrzahl von Abschnitten einen Abschnittsvorspann enthält, wobei der erste Algorithmus den Verschlüsseler (11) zum Durchlassen von unverschlüsselten Abschnittsvorspannen steuert.

8. System gemäß Anspruch 7, wobei die Abschnitte eine Mehrzahl von Transportpaketen aufweisen, wobei der erste Algorithmus den Verschlüsseler (11) zum Durchlassen von lediglich einem oder mehr Transportpaketen von unverschlüsselten Abschnittsvorspannen steuert.

9. System gemäß Anspruch 6, wobei die Abschnitte Makroblöcke enthalten, wobei der erste Algorithmus den Verschlüsseler zum Durchlassen unverschlüsselter Makroblöcke steuert.

10. System gemäß Anspruch 9, wobei der Inhalt Videoinhalt ist, wobei der erste Algorithmus die Makroblöcke in Abhängigkeit von der Position auf dem Bildschirm oder der Menge an redundanten Daten auswählt.

11. System gemäß einem beliebigen der Ansprüche 6 bis 10, wobei der erste Algorithmus zum Bereitstellen einer maximalen Anzahl an unverschlüsselten Abschnitten in dem verschlüsselten Inhalt eingerichtet ist, wobei der zweite Algorithmus einen entschlüsselnden Algorithmus aufweist.

12. System (14) zum Entschlüsseln von verschlüsseltem Inhalt, aufweisend eine Speichervorrichtung (16) zum Speichern von verschlüsseltem Inhalt und einen Signalprozessor (15) zum Entschlüsseln von empfangenem oder gespeichertem verschlüsseltem Inhalt, **dadurch gekennzeichnet, dass** der Signalprozessor (15) mit dem zweiten Algorithmus zum Abtasten des empfangenen und/oder gespeicherten verschlüsselten Inhalts nach unverschlüsselten Abschnitten und zum Verarbeiten von zumindest den unverschlüsselten Abschnitten programmiert ist.

13. System gemäß Anspruch 12, wobei im Falle von gespeichertem verschlüsseltem Inhalt der zweite Algorithmus den Signalprozessor (15) zum Entschlüsseln von einem oder mehreren Abschnitten, die den unverschlüsselten Abschnitten folgen, instruiert.

14. System gemäß Anspruch 12 oder 13, wobei im Falle von empfangenem verschlüsseltem Inhalt der zweite Algorithmus den Signalprozessor (15) zum Reduzieren der Kompression der eingegebenen ausgewählten Abschnitte instruiert, bevorzugt indem der Quantisierungsgrad der unverschlüsselten Abschnitte reduziert wird.

15. System gemäß Anspruch 12, wobei der zweite Algorithmus den Signalprozessor (15) zum Hinzufügen eines Wasserzeichens zu den unverschlüsselten Abschnitten instruiert.

## Revendications

1. Système pour fournir un contenu brouillé, dans lequel le contenu est un flux de paquets de données, chaque paquet de données contenant au moins une adresse, **caractérisé en ce que** le système comprend une première unité de traitement (1) ayant au moins une entrée (2) adaptée pour recevoir le flux de paquets de données de contenu à brouiller, et une pluralité de sorties (3, 4), où l'unité de traitement est programmée pour diviser les paquets de données du flux de paquets de données de contenu sur au moins deux ou plus des entrées, où au moins une entrée (4) est connectée à un brouilleur correspondant (5) pour brouiller les paquets de données reçus de cette sortie.

2. Système selon la revendication 1, dans lequel la première unité de traitement (1) est programmée pour sélectionner les paquets de données pour ladite au moins une sortie (4) à partir du flux de paquets de données de contenu selon un algorithme prédéterminé.

3. Système selon la revendication 1 ou 2, dans lequel une seconde unité de traitement (8) est fournie pour combiner les paquets de données desdites deux ou plus sorties (3, 4) de la première unité de traitement (1) en un flux de paquets de données comprenant les paquets de données brouillés.

4. Système selon la revendication 3, dans lequel les première et seconde unités de traitement sont faites comme une unité de traitement unique (1).

5. Système selon l'une quelconque des revendications précédentes, dans lequel un routeur est utilisé comme unité de traitement.

6. Système (10) pour brouiller du contenu, comprenant un brouilleur (11) pour brouiller le contenu, **caractérisé en ce que** le brouilleur (11) est programmé avec un premier algorithme pour sélectionner des sections à partir du contenu à brouiller, dans lequel le premier algorithme commande le brouilleur pour passer les sections sélectionnées non brouillées pour obtenir une sortie de sections brouillées et de sections non brouillées, dans lesquelles les sections non brouillées permettent le traitement de la sortie selon un second algorithme.

7. Système selon la revendication 6, dans lequel au moins une pluralité de sections comprend un entête de section, dans lequel le premier algorithme commande le brouilleur (11) pour passer des entêtes de section non brouillées.

8. Système selon la revendication 7, dans lequel les sections comprennent une pluralité de paquets de transport, dans lequel le premier algorithme commande le brouilleur (11) pour passer seulement un ou plusieurs paquets de transport d'entêtes de sections non brouillées.

9. Système selon la revendication 6, dans lequel les sections comprennent des macroblocs, dans lequel le premier algorithme commande le brouilleur pour passer des macroblocs non brouillés.

10. Système selon la revendication 9, dans lequel le contenu est un contenu vidéo, dans lequel le premier algorithme sélectionne les macroblocs dépendant de l'emplacement dans l'écran ou de la quantité de données redondantes.

11. Système selon l'une quelconque des revendications 6 à 10, dans lequel le premier algorithme est adapté pour fournir un nombre maximum de sections non brouillées dans le contenu brouillé, dans lequel le second algorithme comprend un algorithme de désembrouillage.

12. Système (14) pour désembrouiller un contenu brouillé, comprenant un dispositif de stockage (16) pour stocker un contenu brouillé, et un processeur de signal (15) pour désembrouiller un contenu brouillé reçu ou stocké, **caractérisé en ce que** le processeur de signal (15) est programmé avec le second algorithme pour scanner le contenu brouillé reçu et/ou stocké pour des sections non brouillées et pour traiter au moins les sections non brouillées.

13. Système selon la revendication 12, dans lequel, en cas de contenu brouillé stocké, le second algorithme donne l'instruction au processeur de signal (15) de désembrouiller une ou plusieurs sections suivant les sections non brouillées.

14. Système selon la revendication 12 ou 13, dans lequel, en cas de contenu brouillé reçu, le second algorithme donne l'instruction au processeur de signal (15) de réduire la compression des sections sélectionnées insérées, préférablement en réduisant le niveau de quantification des sections non brouillées.

15. Système selon la revendication 12, dans lequel le second algorithme donne l'instruction au processeur de signal (15) d'ajouter un filigrane aux sections non brouillées.
